Europäisches Patentamt

European Patent Office

Office européen des brevets

(11) Publication number: **0 317 761**
**A2**

## EUROPEAN PATENT APPLICATION

(21) Application number: **88117381.9**

(22) Date of filing: **19.10.88**

(51) Int. Cl.⁴: **B21D 47/00 , B23P 15/12**

(30) Priority: **22.10.87 IT 8259687**

(43) Date of publication of application:
**31.05.89 Bulletin 89/22**

(84) Designated Contracting States:
**AT BE CH DE ES FR GB GR LI LU NL SE**

(71) Applicant: **RILEY MMGA DI BUSATO ANNA**
**Via Rialto 6**
**I-31050 Camalo'di Povegliano (TV)(IT)**

(72) Inventor: **Busato, Anna**
**Via 33 Reggimento Artiglieria 49**
**I-31100 Treviso(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) Method for the production of a specific metal grill and similar products.

(57) Method for the production of a specific metal grill and similar products, of the type essentially comprising transverse metal bars (3) previously incised , which interlock with longitudinal bars (1) **characterized** by the fact that:
- said transverse metal bars (3) are:
- previously incised along one of its lateral edges in order to interlock said longitudinal bars (1) to realize said grill;
- arranged in horizontal stack, one attached to the other in vertical position (3'), with the incisions on the under side, said transverse metal bars (3) being at right angles to the grill production line placed, like a loader (5-7), pushed against a reciprocal vertical blade (2-2'), realizing an automatic loader (6);
- said longitudinal bars (1) are arranged in a set on the same horizontal plane space apart, parallel to one another, kept in a fixed position and advanced, along the grill line, under said loader (6) with said reciprocal blade (2-2') which:
- descending picks up at least one previously incised transverse bar at a time (3), and then presses it like a comb, into the said longitudinal set of bars beneath (1) order to oblige each longitudinal bar (1) penetrate into a corresponding groove of the transverse bar (3) which is pushed down;
- subsequently returns to a raised position to repeat the action with every transverse bar to follow (3).

FIG. 3

FIG. 2

## METHOD FOR THE PRODUCTION OF A SPECIFIC METAL GRILL AND SIMILAR PRODUCTS

The present Invention relates to a method for the production of a specific metal grill and similar products.

The innovation has a specific, although non exclusive application, in the particular production of grilled man hole covers for example, i.e. the type used for water drainage and general canalization, windowed grills and wherever the use of a grate is necessary.

Currently, in prior art, many different type of grill exist; Some of which are designed for specific purposes, as is the example of the grilled man hole covers for the drainage of water and those for general canalization; These essentially consist of metal bars or strips arranged longitudinally which interlock with transverse bars, which have been previously incised at the intersecting points, the perimeters are surrounded by a metal frame.

In the present state of prior art no specific methods for the production of the said grills are used as these are still produced almost entirely by manual processes. In this invention longitudinal bars are arranged along a check-plate in such a way that they interlock with the traverse bars beneath, which have been previously incised by a few millimeters at the point of intersection with the longitudinal bars. At the end of the positioning phase the bars are sandwiched between a second check-plate and subsequently placed under a press to be pressurized by means of known techniques.

The disadvantages noted in the cited solution, currently adapted according to the previous characteristics, consist essentially of the fact that the production of the said grills require a notable number of hours of labour, implying that the time needed for their production is enormously long and consequently remarkably high costs are incurred. Furthermore the product thus produced often does not meet the standard of quality demanded and is prone to malformation and imprecision regarding the distance to be maintained between the bars.

The aim of the presented invention is to avoid the drawbacks outlined above.

This innovation, according to the claims, solves the problem by means of a method for the production of a specific metal grill and similar products, of the type essentially comprising transverse metal bars previously incised , which interlock with longitudinal bars **characterized** by the fact that:
- said transverse metal bars are:
- previously incised along one of its lateral edges in order to interlock said longitudinal bars to realize said grill;
- arranged in horizontal stack, one attached to the other in vertical position, with the incisions on the under side, said transverse metal bars being at right angles to the grill production line placed, like a loader, pushed against a reciprocal vertical blade, realizing an automatic loader;
- said longitudinal are arranged in a set and arranged on the same plane parallel to one another, kept in a fixed position and advanced, along the grill line, under said loader with said reciprocal blade which:
- descending picks up at least one previously incised transverse bar at a time, and then presses it like a comb, into the said longitudinal set of bars beneath order to oblige each longitudinal bar penetrate into a corresponding groove of the transverse bar which is pushed down;
- subsequently returns to a raised position to repeat the action with every transverse bar to follow.

This solution offers several advantages, consisting essentially of those which eliminate labour, one person alone being sufficient to control the machine, considerably reducing production time and consequently the cost will also be notably lower compared to the previous method.

Furthermore the use of such a process as well as achieving a finished product of a high quality, also offers the possibility of varying the dimensions of production without complication.

In the following, the invention is explained in more detail with the help of the diagrams representing one preferable solution of production in which the details of realization are not intended to be limited but merely used as an example.

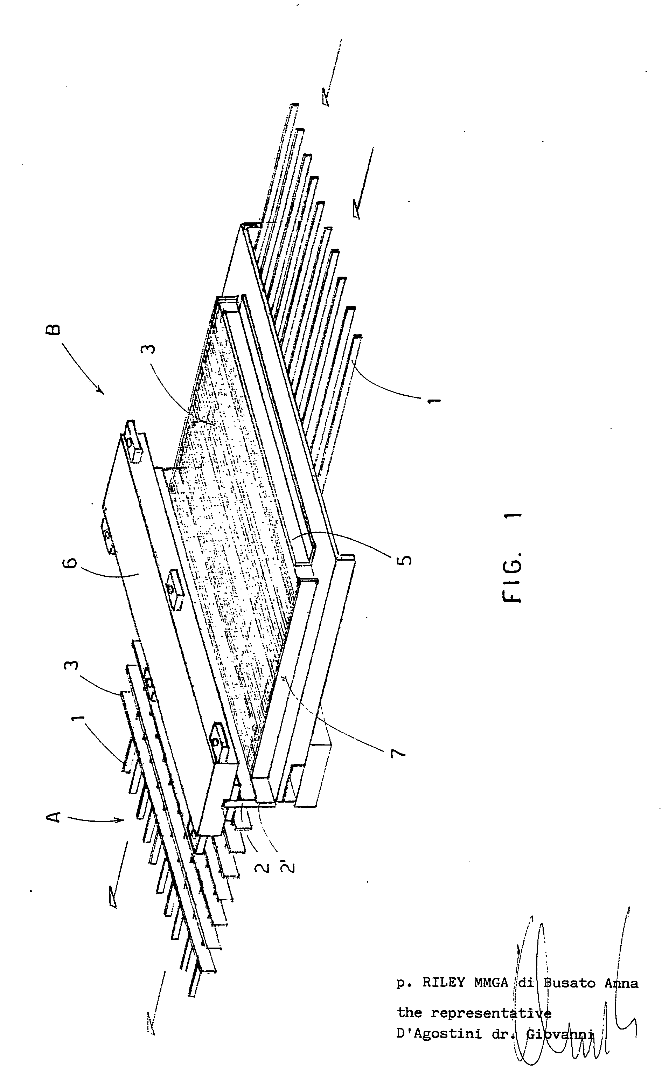

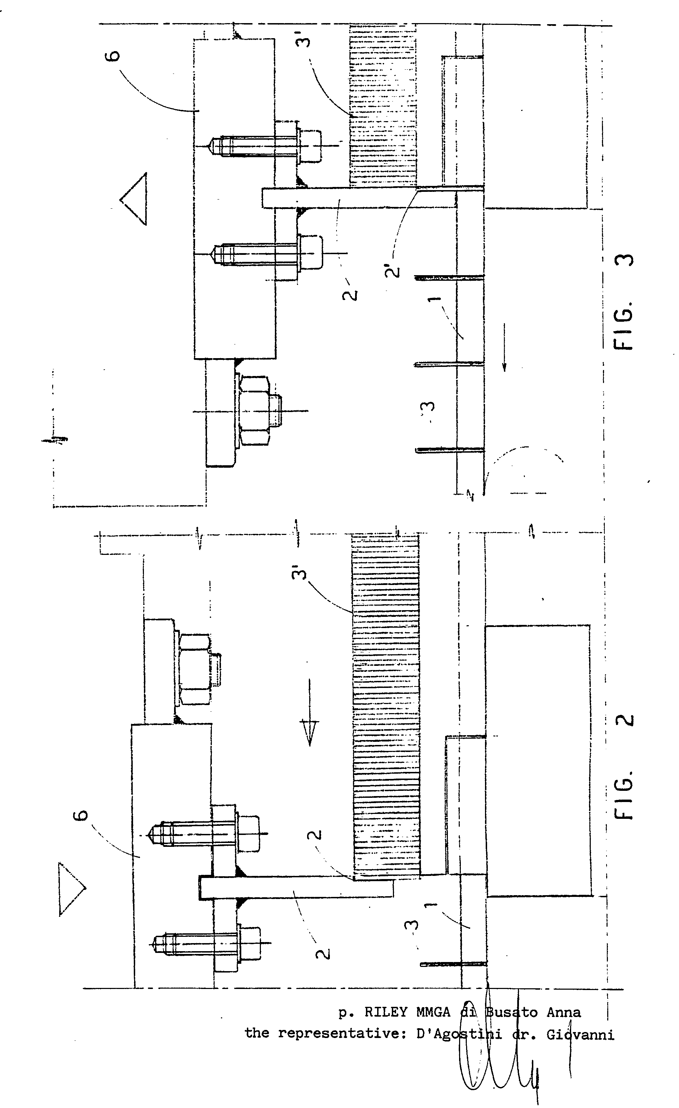

Fig.1 represents a schematic perspective of the grill producing machine. Fig. 2 represents a lateral schematic view of the grill -producing machine in which the pressure blade is in an upright position. Fig. 3 represents a lateral schematic view of the grill producing-machine in which the pressure blade is in a lowered position in order to press the incised transverse bars onto the transverse bars beneath.

As noted above, the method for the production of grills (A) assumes that a number of longitudinal metal strips or bars(1) arranged on the same plane parallel to one another, interlock one by one with those beneath and a machine (B) which, by means of a pressure blade (2) gradually picks up at least one traverse bar (3) and the press interlocks them with the said longitudinal bars below (1) subsequently to return to an upright position in order to repeat the action for the next transverse bar (Fig. 2 and 3). The said transverse bars (3) are previously incised by a few millimeters ( on the underside at the under edge) to allow interlocking with the longitudinal bars (1) The transverse bars (3) are arranged in a loader (6) connected to the said machine (B) being the said blade (2) placed at the head of the said loader. The bars (3) are kept in a fixed position against the blade (2) as a stack, by pressure means, with known equipment e.g. a spring (not disclosed in the drawings) that pushes continuously a movable plate (5) of the loader (6). In addition, the stack of bars (3′) are kept in a lateral position by a couple of guide-lines one on each opposing side (7). The blade (2) consists of a transverse bar placed orthogonally to, reciprocal against an abutment (2′) the bring the transverse bars (3) one by one from the stack end pushes it down lake e comb to interlock with the placed beneath set of longitudinal bars (1).

The blade (2) is interchangeable and is connected to a support block (6) on which the noted presses operates, being the reciprocal movement realized in a convenient way e.g. utilizing (non disclosed in the drawings) fluid-dynamic cylinder means. Be noted that the machine comprises adjustable fixing means of longitudinal bars (1) in order to space them in different distances in accordance to the interspace of the incisions in transverse bars. Obviously the machine is provided with control means in order to coordinate said movements.

Furthermore the loader (6) can be movable along grill production line to interlock the transverse bars while the longitudinal bars advance, otherwise the loader (6) is in a fixed position whereas the longitudinal bars advance step by step.

## Claims

1, Method for the production of a specific metal grill and similar products, of the type essentially comprising transverse metal bars (3) previously incised , which interlock with longitudinal bars (1) **characterized** by the fact that:
- said transverse metal bars (3) are
- previously incised along one of its lateral edges in order to interlock said longitudinal bars (1) to realize said grill;
- arranged in horizontal stack, one attached to the other in vertical position (3′), with the incisions on the under side, said transverse metal bars (3) being at right angles to the grill production line placed, like a loader (5-7), pushed against a reciprocal vertical blade (2-2′), realizing an automatic loader (6);
- said longitudinal bars (1) are arranged in a set on the same horizontal plane space apart, parallel to one another, kept in a fixed position and advanced, along the grill line, under said loader (6) with said reciprocal blade (2-2′) which:
- descending picks up at least one previously incised transverse bar at a time (3), and then presses it like a comb, into the said longitudinal set of bars beneath (1) order to oblige each longitudinal bar (1) penetrate into a corresponding groove of the transverse bar (3) which is pushed down;
- subsequently returns to a raised positioned to repeat the action with every transverse bar to follow (3).

2. A machine to automatically produce metallic grills, according to the method as in claim 1. , characterized by the fact that it comprises:
- first means to advance in horizontal plane after positioning and keeping in fixed position, spaced apart, a set of longitudinal bars (1),
- second means to realize an automatic transverse bars loader (6), in which the transverse bars can be placed in horizontal stack (3′) along and above the respective advance means of longitudinal bars (1), said loader comprising:
-pressure means for pick up and interlocking said transverse bars (3) onto the longitudinal bars (1).

3. Method and machine, in accordance with claims 1 and 2, characterized by the fact that the said pressure means for the interlocking of the said transverse bars onto the longitudinal bars (1), consist of a blade (2) being an abutment (2′) realized longitudinally and placed against the transverse bars (3).

4 Method and machine, in accordance with claim 1, and 2 , characterized by the fact that the said loading means (6) of the transverse bars (3) in stacks (3′) consist of a couple of lateral guide-lines , one on either side, (7) and a push plate (4) at the upstream end of the stack of bars (3′).

5. Method and machine, in accordance with claim 1 and 2, characterized by the fact that said first means consists in continuously advance means being said second means movable with the advancing of said firs means in order to to interlock the transverse bars (3) with the longitidunal bars (1) during the advancing of said longitudinal bars.

6. Method and machine, in accordance with claim 1 and 2, characterized by the fact that said first means consist of step by step advance means being said second means fixed in order to to interlock the transverse bars (3) with the longitudinal bars (1) during each step consisting in a temporary stop of the advancement of said longitudinal bars (1).

FIG. 1

FIG. 3

FIG. 2

p. RILEY MMGA di Busato Anna
the representative: D'Agostini dr. Giovanni